# EUROPEAN PATENT APPLICATION

(11) **EP 4 408 049 A1**
(43) Date of publication of application: **31.07.2024**
(21) Application number: 22882813.3
(22) Date of filing: 17.10.2022
(51) Int. Cl.: H04W 12/02

(54) **COMMUNICATION METHOD AND APPARATUS**

(30) Priority: 21.10.2021 CN 202111229597
(71) Applicant: Huawei Technologies Co., Ltd., Shenzhen, Guangdong 518129 (CN)
(72) Inventor: HE, Qingchun, Shenzhen, Guangdong 518129 (CN); YU, Youyang, Shenzhen, Guangdong 518129 (CN); CHENG, Xingqing, Shenzhen, Guangdong 518129 (CN); LI, Mingchao, Shenzhen, Guangdong 518129 (CN)
(74) Representative: Pfenning, Meinig & Partner mbB
(86) International application number: PCT/CN2022/125728
(87) International publication number: WO 2023/066207

(57) **Abstract**

A communication method and apparatus are provided, to resolve a problem in the conventional technology that a security risk exists when communication information is exchanged between a first node and a gateway according to a general packet radio service tunneling protocol user plane protocol GTP-U. The method includes: The gateway obtains first information; sends, to the first node, an access protocol message (for example, an EAP-5G message or an SLAP message) that carries the first information, where the first information includes one or more of information that indicates an integrity protection algorithm, information that indicates an encryption algorithm, an integrity protection key, or an encryption key; and exchanges communication information with the first node according to GTP-U based on the first information, where the gateway belongs to a second communication system, and the first node belongs to a first communication system. The gateway and the first node may implement security and/or integrity protection on the communication information based on the first information, so that security of the communication information can be improved when the first node and the gateway exchange the communication information according to GTP-U.

## Description

### CROSS-REFERENCE TO RELATED APPLICATIONS

This application claims priority to Chinese Patent Application No. 202111229597.3, filed with the China National Intellectual Property Administration on October 21, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With continuous development of communication technologies, communication systems of different communication technologies are widely used. For example, in a short-range communication system, a communication distance is limited, but power consumption and costs of a terminal device are low. For another example, a 5th generation (5th generation, 5G) cellular network communication system may provide a macro coverage, and a communication range is wide, but power consumption and costs of a terminal device are high. To make advantages of different communication systems complement each other, the communication systems may be converged. For example, the short-range communication system and the 5G cellular network communication system may be converged, so that a converged communication system can implement long-distance transmission with low power consumption and low costs.

The converged communication system also poses high requirements on security of communication transmission. A non-3rd Generation Partnership Project (3rd Generation Partnership Project, 3GPP) and 5G cellular network converged technology (5G converged communication technology for short) is used as an example. In the conventional technology, when a terminal device registers with a 5G core network through a gateway, a secure channel for data transmission needs to be established between the terminal device and the gateway through an Internet protocol transmission key exchange (Internet protocol key exchange, IKE) security association (security association, SA) procedure. In this way, complexity of a signaling interaction procedure and a terminal device protocol is increased. To reduce the complexity of the terminal device protocol and the signaling interaction procedure, a general packet radio service tunneling protocol (general packet radio service tunneling protocol) user plane (user plane) protocol (which may be referred to as GTP-U for short) solution may be used between the terminal device and the gateway to replace the IKE SA/Internet protocol security (Internet protocol security, Ipsec) SA procedure. However, based on the GTP-U solution, there is a security risk in data transmission between the terminal device and the gateway.

In conclusion, currently, how to improve security of information transmission between the terminal device and the gateway while reducing the complexity of the terminal device protocol and the signaling interaction procedure is a technical problem that needs to be resolved urgently.

### SUMMARY

This application provides a communication method and apparatus, to improve security of information exchanged between a first node and a gateway.

According to a first aspect, this application provides a communication method. The method includes: A gateway obtains first information, where the first information includes any one or any combination of information that indicates an integrity protection algorithm, information that indicates an encryption algorithm, an integrity protection key, or an encryption key; and the gateway sends, to the first node, an access protocol message that carries the first information, and exchanges communication information with the first node according to GTP-U based on the first information, where the first node belongs to a first communication system, and the gateway belongs to a second communication system.

The first communication system and the second communication system are two different communication systems. The first communication system may use a first communication technology for communication, and the second communication system may use a second communication technology for communication. In a scenario in which the first communication technology and the second communication technology are converged, a communication connection may be established between the second communication system and the first communication system to form a heterogeneous communication system, so that corresponding communication services can be performed and/or service data can be transmitted in the heterogeneous communication system. The heterogeneous communication system may alternatively be referred to as a converged communication system, a tight interworking (tight interworking) communication system, or an interworking (interworking) communication system. The first communication system may be, for example, a short-range communication system (for example, a SparkLink short-range wireless communication system), and the second communication system may be, for example, a 5G cellular network communication system.

Based on this solution, the gateway may perform, based on the first information, security and/or integrity protection on the information exchanged between the gateway and the first node according to GTP-U, so that security of the exchanged communication information can be improved when the first node and the gateway exchange the communication information according to GTP-U. It may also be understood that, based on the foregoing solution, complexity of a protocol stack of the first node and a signaling interaction procedure between the first node and the gateway can be reduced, and security of the information exchanged between the first node and the gateway can be ensured.

In a possible implementation, the access protocol message includes an extensible authentication protocol (extensible Authentication Protocol, EAP)-5G message or a SparkLink access protocol (SparkLink access protocol, SLAP) message.

In a possible implementation, the gateway may receive the first information from a core network device, where the core network device belongs to the second communication system. Alternatively, the gateway may receive second information from a core network device, and generate the first information based on the second information. The first information or the second information or both correspond to capability information of the first node, and the capability information includes information indicating that the first node supports the integrity protection algorithm and/or the encryption algorithm.

In a possible implementation, the method further includes: The gateway sends priority information to the first node, where the priority information indicates a priority of control plane signaling and/or a priority of user plane data, and the information exchanged between the gateway and the first node includes the control plane signaling and/or the user plane data.

When congestion occurs, based on the priority information, a packet loss rate can be reduced and reliability of data transmission can be improved.

In a possible implementation, the method further includes: The gateway sends first quality of service (quality of service, QoS) information to the first node, where the first QoS information is used for communication between nodes in the first communication system and/or communication between the first node and the core network device.

QoS control between the nodes in the first communication system and/or between the first node and the core network device can be implemented based on the first QoS information.

Further, optionally, the first QoS information may be from a core network device. Alternatively, the gateway may receive second QoS information from the core network device, and generate the first QoS information based on a link status and the second QoS information. Alternatively, the gateway may generate the first QoS information based on a link status.

The gateway generates the first QoS information, so that more control rights may be granted to the gateway, to increase processing flexibility of the gateway.

In a possible implementation, the method further includes: The gateway sends first tunnel information to the first node, where the first tunnel information is used to establish a tunnel for exchanging the communication information between the first node and the gateway.

When the control plane signaling is transmitted between the first node and the gateway according to GTP-U, and a GTP-U tunnel is required, the GTP-U tunnel may be established between the first node and the gateway based on the first tunnel information, and may be removed when not used. In other words, based on a requirement, the GTP-U tunnel between the first node and the gateway may be dynamically established or removed based on the first tunnel information.

In a possible implementation, the access protocol message further includes indication information, and the indication information may indicate at least one of the first information, the priority information, the first QoS information, or the first tunnel information.

The indication information is added to the access protocol message, so that at least one of the first information, the priority information, the first QoS information, or the first tunnel information included in the access protocol message can be quickly obtained through parsing.

According to a second aspect, this application provides a communication method. The method includes: A first node receives first information from a gateway, where the first information includes any one or any combination of information that indicates an integrity protection algorithm, information that indicates an encryption algorithm, an integrity protection key, or an encryption key, the first node belongs to a first communication system, and the gateway belongs to a second communication system. The first node exchanges communication information with the gateway according to GTP-U based on the first information.

Based on this solution, the first node may perform, based on the first information, security and/or integrity protection on the information exchanged between the first node and the gateway according to GTP-U, so that security of the exchanged communication information can be improved when the first node and the gateway exchange the communication information according to GTP-U. It may also be understood that, based on the foregoing solution, complexity of a protocol stack of the first node and a signaling interaction procedure between the first node and the gateway can be reduced, and security of the information exchanged between the first node and the gateway can be ensured.

In a possible implementation, an access protocol message includes an extensible authentication protocol EAP-5G message or a SparkLink access protocol SLAP message.

In a possible implementation, the method further includes: The first node sends capability information to a core network device, where the capability information includes information indicating that the first node supports the integrity protection algorithm and/or the encryption algorithm, the capability information corresponds to the first information, and the core network device belongs to the second communication system.

In a possible implementation, the information exchanged between the first node and the gateway includes control plane signaling and/or user plane data. The method further includes: The first node receives priority information from the gateway, where the priority information indicates a priority of the control plane signaling and/or a priority of the user plane data. The first node may perform packet loss processing on the exchanged information based on the priority information.

When congestion occurs, based on the priority information, a packet loss rate can be reduced and reliability of data transmission can be improved.

In a possible implementation, the method further includes: The first node receives first QoS information from the gateway; and the first node communicates with a second node in the first communication system based on the first QoS information, and/or communicates with the core network device based on the first QoS information, where the core network device belongs to the second communication system.

QoS control between nodes in the first communication system and/or between the first node and the core network device can be implemented based on the first QoS information.

In a possible implementation, the method further includes: The first node receives first tunnel information from the gateway, and the first node establishes, with the gateway based on the first tunnel information, a tunnel for exchanging the information.

When the control plane signaling is transmitted between the first node and the gateway according to GTP-U, and a GTP-U tunnel is required, the GTP-U tunnel may be established between the first node and the gateway based on the first tunnel information, and may be removed when not used. In other words, based on a requirement, the GTP-U tunnel between the first node and the gateway may be dynamically established or removed based on the first tunnel information.

According to a third aspect, this application provides a communication apparatus. The communication apparatus is configured to implement the method according to any one of the first aspect or the possible implementations of the first aspect, or configured to implement the method according to any one of the second aspect or the possible implementations of the second aspect. The communication apparatus includes corresponding functional modules respectively configured to implement steps in the foregoing methods. The function may be implemented by hardware, or may be implemented by hardware executing corresponding software. The hardware or software includes one or more modules corresponding to the foregoing functions.

In a possible scenario, the communication apparatus may be a gateway, or a module that can be used in the gateway, for example, a chip, a chip system, or a circuit. For beneficial effects, refer to the description of the first aspect. Details are not described herein again. The communication apparatus may include an interface circuit and a processor. The processor is configured to implement a corresponding function in the first aspect by using a logic circuit or by executing code instructions. The interface circuit is configured to: receive a signal from a communication apparatus other than the communication apparatus and transmit the signal to the processor, or send a signal from the processor to the communication apparatus other than the communication apparatus. The interface circuit may be an independent receiver, an independent transmitter, or a transceiver integrating a sending function and a receiving function. Optionally, the communication apparatus may further include a memory. The memory may be coupled to the processor, and the memory stores program instructions and data that are necessary for the communication apparatus.

The processor is configured to obtain first information, where the first information includes any one or any combination of information that indicates an integrity protection algorithm, information that indicates an encryption algorithm, an integrity protection key, or an encryption key, and the gateway belongs to a second communication system. The interface circuit is configured to send an access protocol message to a first node, where the access protocol message includes the first information, and the first node belongs to the second communication system. The processor is further configured to exchange communication information with the first node according to a general packet radio service tunneling protocol GTP user plane protocol based on the first information by using the interface circuit.

In a possible implementation, the access protocol message includes an extensible authentication protocol EAP-5G message or a SparkLink access protocol SLAP message.

In a possible implementation, the interface circuit is configured to receive the first information from a core network device, where the core network device belongs to the second communication system. Alternatively, the interface circuit is configured to receive second information from the core network device, and the processor is configured to generate first information based on the second information, where the first information or the second information or both correspond to capability information of the first node, and the capability information includes information indicating that the first node supports the integrity protection algorithm and/or the encryption algorithm.

In a possible implementation, the exchanged communication information includes control plane signaling and/or user plane data. The interface circuit is configured to send priority information to the first node, where the priority information indicates a priority of the control plane signaling and/or a priority of the user plane data.

In a possible implementation, the interface circuit is configured to send first quality of service QoS information to the first node, where the first QoS information is used for communication between nodes in the first communication system, and/or communication between the first node and the core network device.

In a possible implementation, the first QoS information is from the core network device; or the interface circuit is further configured to receive second QoS information from the core network device; and the processor is further configured to generate the first QoS information based on link status information and the second QoS information; or the processor is configured to generate the first QoS information based on link status information.

In a possible implementation, the interface circuit is further configured to send first tunnel information to the first node, where the first tunnel information is used to establish a tunnel for exchanging the communication information between the first node and the gateway.

In a possible implementation, at least one of the priority information, the first QoS information, or the first tunnel information is carried in the access protocol message.

In a possible implementation, the access protocol message further includes indication information.

The indication information indicates at least one of the first information, the priority information, the first QoS information, or the first tunnel information.

In another possible scenario, the communication apparatus may be a first node, or a component that can be used in the first node, for example, a chip, a chip system, or a circuit. For beneficial effects, refer to the description of the second aspect. Details are not described herein again. The communication apparatus may include an interface circuit and a processor. The processor is configured to implement a corresponding function in the first aspect by using a logic circuit or by executing code instructions. The interface circuit is configured to: receive a signal from a communication apparatus other than the communication apparatus and transmit the signal to the processor, or send a signal from the processor to the communication apparatus other than the communication apparatus. The interface circuit may be an independent receiver, an independent transmitter, or a transceiver integrating a sending function and a receiving function. Optionally, the communication apparatus may further include a memory. The memory may be coupled to the processor, and the memory stores program instructions and data that are necessary for the communication apparatus.

The interface circuit is configured to receive first information from a gateway, where the first information includes any one or any combination of information that indicates an integrity protection algorithm, information that indicates an encryption algorithm, an integrity protection key, or an encryption key, the first node belongs to a first communication system, and the gateway belongs to a second communication system. The processor is configured to exchange communication information with the gateway according to a general packet radio service tunneling protocol GTP user plane protocol based on the first information by using the interface circuit.

In a possible implementation, the access protocol message includes an extensible authentication protocol EAP-5G message or a SparkLink access protocol SLAP message.

In a possible implementation, the interface circuit is further configured to send capability information to a core network device, where the capability information includes information indicating that the first node supports the integrity protection algorithm and/or the encryption algorithm, the capability information corresponds to the first information, and the core network device belongs to the second communication system.

In a possible implementation, the information includes control plane signaling and/or user plane data. The interface circuit is further configured to receive priority information from the gateway, where the priority information indicates a priority of the control plane signaling and/or a priority of the user plane data. The processor is further configured to perform packet loss processing on the exchanged information based on the priority information.

In a possible implementation, the interface circuit is configured to receive first quality of service QoS information from the gateway. The processor is configured to communicate with a second node in the first communication system based on the first QoS information; and/or the processor is configured to communicate with the core network device in the second communication system based on the first QoS information.

In a possible implementation, the interface circuit is further configured to receive first tunnel information from the gateway. The processor is further configured to establish, with the gateway based on the first tunnel information, a tunnel for exchanging the communication information.

According to a fourth aspect, this application provides a communication apparatus. The communication apparatus is configured to implement the method according to any one of the first aspect or the possible implementations of the first aspect, or configured to implement the method according to any one of the second aspect or the possible implementations of the second aspect. The communication apparatus includes corresponding functional modules respectively configured to implement steps in the foregoing methods. The function may be implemented by hardware, or may be implemented by hardware executing corresponding software. The hardware or software includes one or more modules corresponding to the foregoing functions.

In a possible implementation, the communication apparatus may be a gateway, and the communication apparatus may include a processing module and a transceiver module. These modules may perform corresponding functions of the gateway in the foregoing method examples. For details, refer to the detailed description in the method examples. Details are not described herein again.

In another possible implementation, the communication apparatus may alternatively be a first node. The communication apparatus may include a transceiver module and a processing module. The modules may perform corresponding functions of the first node in the foregoing method example. For details, refer to the detailed description in the method example. Details are not described herein again.

According to a fifth aspect, this application provides a communication system. The communication system includes a first node and a gateway. The gateway may be configured to perform the method according to any one of the first aspect or the possible implementations of the first aspect, and the first node may be configured to perform the method according to any one of the second aspect or the possible implementations of the second aspect.

According to a sixth aspect, this application provides a chip, including at least one processor and an interface circuit. Further, optionally, the chip may further include a memory, and the processor is configured to execute the computer program or instructions stored in the memory, so that the chip is enabled to perform the method according to any one of the first aspect or the possible implementations of the first aspect.

According to a seventh aspect, this application provides a computer-readable storage medium, where the computer-readable storage medium stores a computer program or instructions, and when the computer program or the instructions are executed by a communication apparatus, the communication apparatus is enabled to perform the method according to any one of the first aspect or the possible implementations of the first aspect, or the communication apparatus is enabled to perform the method according to any one of the second aspect or the possible implementations of the second aspect.

According to an eighth aspect, this application provides a computer program product. The computer program product includes a computer program or instructions. When the computer program or the instructions are executed by a communication apparatus, the communication apparatus is enabled to perform the method according to any one of the first aspect or the possible implementations of the first aspect, or the communication apparatus is enabled to perform the method according to any one of the second aspect or the possible implementations of the second aspect.

For technical effects that can be achieved in any one of the second aspect to the eighth aspect, refer to description of beneficial effects in the first aspect. Details are not described herein again.

### BRIEF DESCRIPTION OF DRAWINGS

FIG. 1 is a schematic diagram of an architecture of a communication system according to this application;
FIG. 2a and FIG. 2b are schematic diagrams of two control plane protocol stacks according to this application;
FIG. 2c is a schematic diagram of a user plane protocol stack according to this application;
FIG. 3a and FIG. 3b are schematic diagrams of two optimized control plane protocol stacks according to this application;
FIG. 3c is a schematic diagram of an optimized user plane protocol stack according to this application;
FIG. 4 is a schematic method flowchart of a communication method according to this application;
FIG. 5a is a schematic flowchart of a method for obtaining first information by a gateway according to this application;
FIG. 5b is a schematic flowchart of another method for obtaining first information by a gateway according to this application;
FIG. 6 is a schematic diagram of a frame format of an EAP-5G message that carries first information according to this application;
FIG. 7 is a schematic method flowchart of another communication method according to this application;
FIG. 8a is a schematic method flowchart of another communication method according to this application;
FIG. 8b is another schematic diagram of end-to-end QoS control according to this application;
FIG. 9 is a schematic method flowchart of another communication method according to this application;
FIG. 10a is a schematic method flowchart of another communication method according to this application;
FIG. 10b is a schematic diagram of a frame format of an EAP-5G message that carries first information, third information, fourth information, fifth information, and indication information according to this application;
FIG. 11 is a schematic diagram of a structure of a communication apparatus according to this application; and
FIG. 12 is a schematic diagram of a structure of a communication apparatus according to this application.

### DESCRIPTION OF EMBODIMENTS

The following describes in detail embodiments of this application with reference to accompanying drawings.

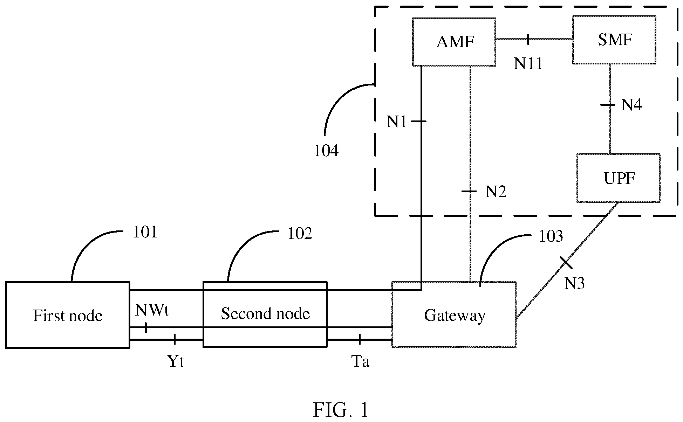

FIG. 1 is a schematic diagram of an architecture of a communication system to which this application is applicable. As shown in FIG. 1, the communication system may include a first node 101, a second node 102, a gateway 103, and a core network device 104. The first node 101 and the second node 102 belong to a first communication system, and the first node 101 and the second node 102 may communicate with each other by using a first communication technology. The gateway 103 and the core network device 104 belong to a second communication system, and the gateway 103 and the core network device 104 may communicate with each other by using a second communication technology. It may be understood that the first communication system and the second communication system are different communication systems. The first node 101 communicates with the gateway 103 in a wireless manner, and the gateway 103 communicates with the core network device 104 in a wireless or wired manner. The core network device 104 and the gateway 103 may be independent and different physical devices. Alternatively, a function of the core network device 104 and a logical function of the gateway 103 may be integrated into a same physical device. Alternatively, a physical device may integrate some functions of the core network device 104 and some functions of the gateway 103. The first communication technology is different from the second communication technology. In a scenario in which the first communication technology and the second communication technology are converged, a communication connection may be established between the second communication system and the first communication system to form a heterogeneous communication system, so that corresponding communication services can be performed and/or service data can be transmitted in the heterogeneous communication system. The heterogeneous communication system may alternatively be referred to as a converged communication system, a tight interworking (tight interworking) communication system, or an interworking (interworking) communication system.

The first node 101 may be a terminal device or a communication apparatus that can support a terminal device in implementing a function required by the method, or may be another communication apparatus, for example, a chip system. The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in this application. The various terminal devices described above, if located on a vehicle (for example, placed in the vehicle or mounted inside the vehicle), may be considered as a vehicle-mounted terminal device. Device types of the first node 101 and the second node 102 may be different. For example, the first node may be a terminal node (which may be referred to as a T node) in a SparkLink short-range wireless communication system. The T node is mainly configured to receive scheduling information, and perform data sending and receiving processing based on the scheduling information. The second node may be a management node (which may be referred to as a G node) in the SparkLink short-range wireless communication system. The management node may provide a SparkLink short-range wireless short-range access service (for example, providing a 5G convergence service for the T node covered by the management node, or allocating and scheduling an air interface resource for the T node covered by the management node) for a first node (such as the T node) covered by the management node.

The gateway 103 may be an access device used by the first node 101 to access the second communication system in a wireless manner, and may provide a wireless communication function for the first node. The gateway 103 may be a trusted non-3rd generation partnership project (3rd generation partnership project, 3GPP) gateway function (trusted non-3GPP gateway function, TNGF), or may be, for example, a base station (base station), an evolved NodeB (evolved NodeB, eNodeB), a transmission (transmission and reception) point (transmission reception point, TRP), a next-generation NodeB (next generation NodeB, gNB) in a 5G communication system, a base station in a future communication system, an access node in a wireless fidelity (wireless-fidelity, Wi-Fi) system, or the like. The gateway 103 may also be a module or a unit that implements some functions of a base station. For example, the gateway 103 may be a centralized unit (central unit, CU), may be a distributed unit (distributed unit, DU), or may be a newly defined gateway that is used for convergence of a SparkLink short-range wireless communication system and a 5G cellular network communication system. The gateway 103 may be referred to as a SparkLink access gateway function network element, may be deployed by an operator, and may exchange control plane signaling and user plane data with a core network device in a 5G cellular network communication system through an N2 interface and an N3 interface, to support transparent transmission of a non-access stratum (non-access stratum, NAS) message between the first node and the core network device. A specific technology and a specific device form used by the gateway are not limited in this application. It may be understood that the second node 102 and the gateway (TNGF) 103 may belong to a trusted SparkLink access network (trusted SparkLink access network, TSAN).

The core network device 104 includes a mobility management network element, and is mainly used for registration, mobility management, and tracking area update procedures of a terminal device in a mobile network. The mobility management network element terminates a NAS message, completes registration management, connection management, reachability management, tracking area list (track area list, TA list) allocation, mobility management, and the like, and transparently routes a session management (session management, SM) message to the session management network element. In 5G communication, the mobility management network element may be an access and mobility management function (access and mobility management function, AMF) network element. In future communication such as 6G, the mobility management network element may still be an AMF network element, or have another name. This is not limited in this application. It should be understood that the core network device 104 may further include another device, for example, a function entity such as a session management function (session management function, SMF) and a user plane function (User Plane Function, UPF). Details are not listed one by one herein again.

Nodes or function entities in FIG. 1 may be connected through an interface. A sequence number of an interface or a name of an interface is not limited in embodiments of this application. An interface defined in a related 3GPP standard protocol of a 5G system may be used, or an interface in a future communication system may be used. For example, the first node 101 may communicate with the second node 102 through a Yt interface, the second node 102 may communicate with the gateway 103 through a Ta interface, and the first node 101 may communicate with the gateway 103 through an NWt interface. The second node 102 and the first node 101 may communicate with the AMF through a next generation network (next generation, N) 1 interface (N1 for short), and the gateway 103 may communicate with the AMF through an N2 interface (N2 for short). In this way, the 5G network can perceive key information such as a device status, a network status, and a service status of the first node 101 through the second node 102, to be remotely reachable, perceptible, and manageable to an industry field network and a service.

It should be noted that FIG. 1 is merely a schematic diagram. The first communication system may further include another device, and the second communication system may also include another device, for example, may further include a wireless relay device and a wireless backhaul device, which are not shown in FIG. 1. A quantity of the first nodes, the second nodes, the gateways, and the core network devices included in the communication system is not limited in this application. In addition, names of nodes, network elements, interfaces between network elements, and interfaces between nodes in FIG. 1 are merely examples. This is not specifically limited in this application. It may be understood that each function in this application may be an element in a hardware device, may be a software function running on dedicated hardware, a combination of hardware and software, or a virtualization function instantiated on a platform (for example, a cloud platform). In addition, a distribution form of each function is not limited in this application. Optionally, each function may also include another function entity formed by combining any of the foregoing plurality of functions.

In a possible scenario, the first communication system is a short-range communication system (for example, a SparkLink short-range wireless communication system), and the second communication system is a 5G cellular network communication system. The short-range communication system refers to a communication system using a short-range communication technology. The short-range communication technology includes but is not limited to a Bluetooth (Bluetooth) technology, a wireless fidelity (wireless fidelity, Wi-Fi) technology, a near field communication (near field communication, NFC) technology, a Wi-Fi aware technology, a general short-range communication technology (such as vehicle-mounted universal short-range communication), and a short-range communication technology specified by a SparkLink Alliance. The short-range communication technology can be widely used in file transfer, remote control, screen projection, and sensing of a surrounding device (for example, a smart vehicle, a smart terminal device, a smart home device, a smart manufacturing device, or an industrial field device). It should be understood that, in addition to the foregoing listed short-range communication technologies, another existing short-range communication technology, or another short-range communication technology that may emerge in the future with evolution of communication technologies, may also be applicable to this solution. In the short-range communication system, both the first node 101 and the second node 102 may be terminal devices having a short-range communication function. For example, the first node 101 may be a T node, the second node 102 may be used as a G node (or referred to as a trusted authorization node or a main control node) of the first node 101, and a communication domain between the first node 101 and the second node 102 may be referred to as a short-range communication domain. It may be understood that both the first node 101 and the second node 102 may support the first communication technology and the second communication technology. On one hand, the first node 101 may perform short-range communication with the second node 102. On the other hand, the first node 101 may perform 5G cellular network communication with the gateway 103.

In the communication system in which the short-range communication system and the 5G cellular network communication system are converged, the first node 101 that supports short-range communication may register and access the 5G network through the gateway 103 or a non-3GPP management node, and further use a service provided by the 5G network. In addition, the 5G network may further configure and manage a data transmission policy for the first node 101 based on subscription information and link status information of the first node 101. For example, the 5G network may send information about a configured short-range communication system to the gateway 103 based on an N2 initial context request message, to provide a refined service. Therefore, in the converged communication system, the short-range communication system and the 5G cellular network communication system may interact with each other to complement each other's advantages.

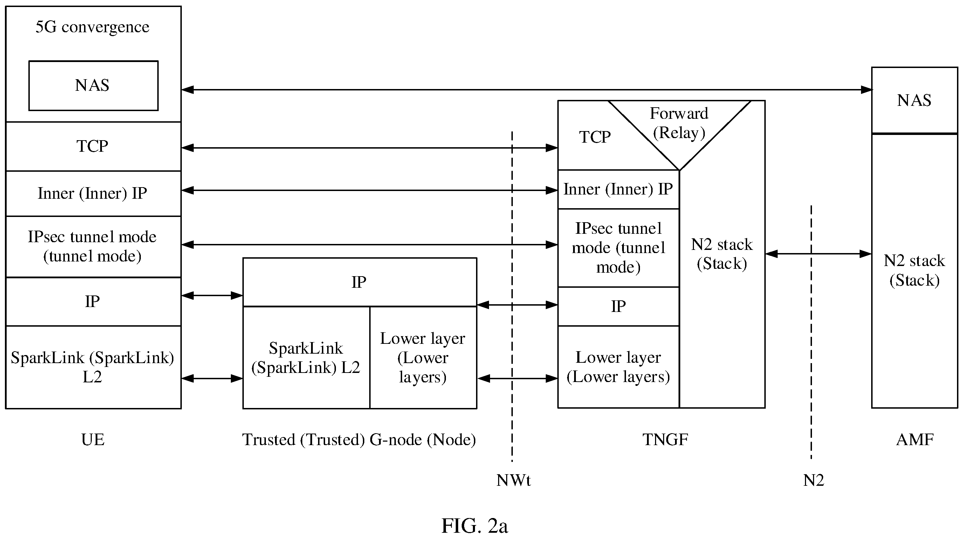

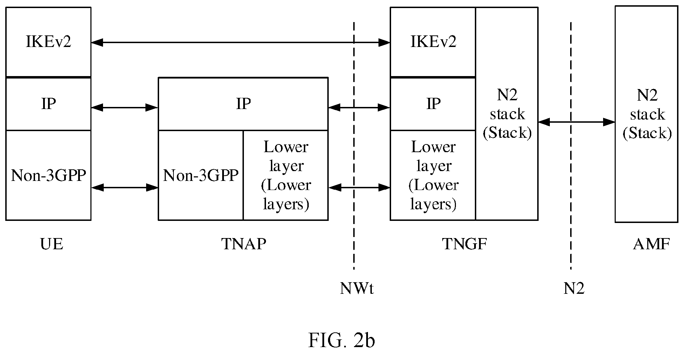

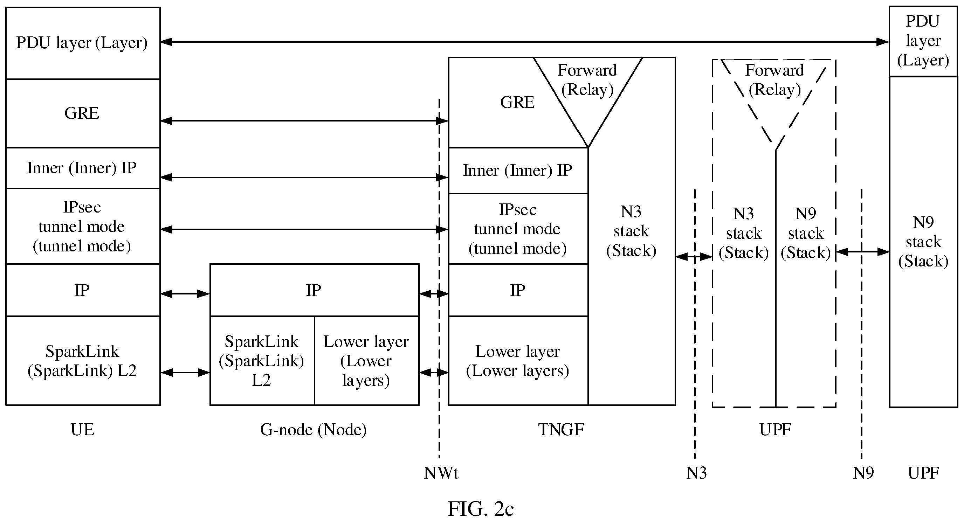

In the converged communication system, to ensure security of communication information exchange between the first node and the gateway, a secure channel for data transmission needs to be established between the first node and the gateway through an IKE SA (that is, IP transmission key exchange security association) procedure. To support the secure channel established for data transmission through the IKE SA procedure between the first node and the gateway, both a user plane protocol stack and a control plane protocol stack of the first node and the gateway are complex (with reference to FIG. 2a to FIG. 2c). Both the first node and the gateway include an inner IP and IPSec. The inner IP may distinguish between different protocol data unit (protocol data unit, PDU) sessions, and the IPSec may perform security protection on IP data. In addition, a procedure of establishing a secure channel for data transmission through the IKE SA procedure is complex, and signaling interaction between the first node and the gateway is increased.

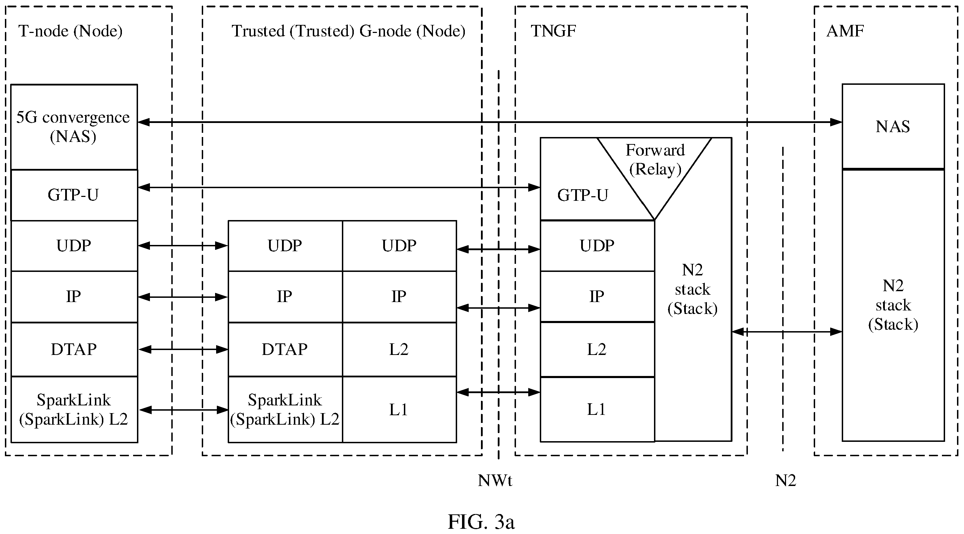

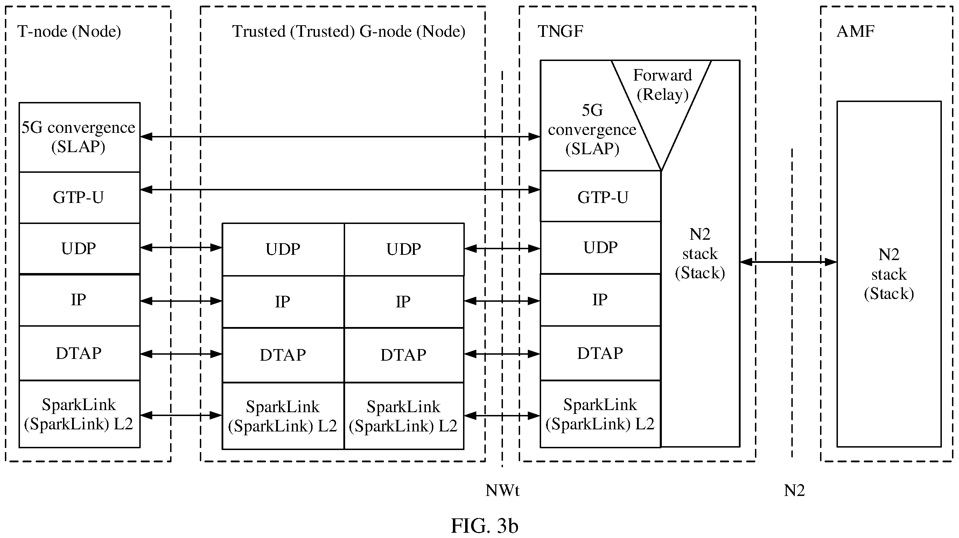

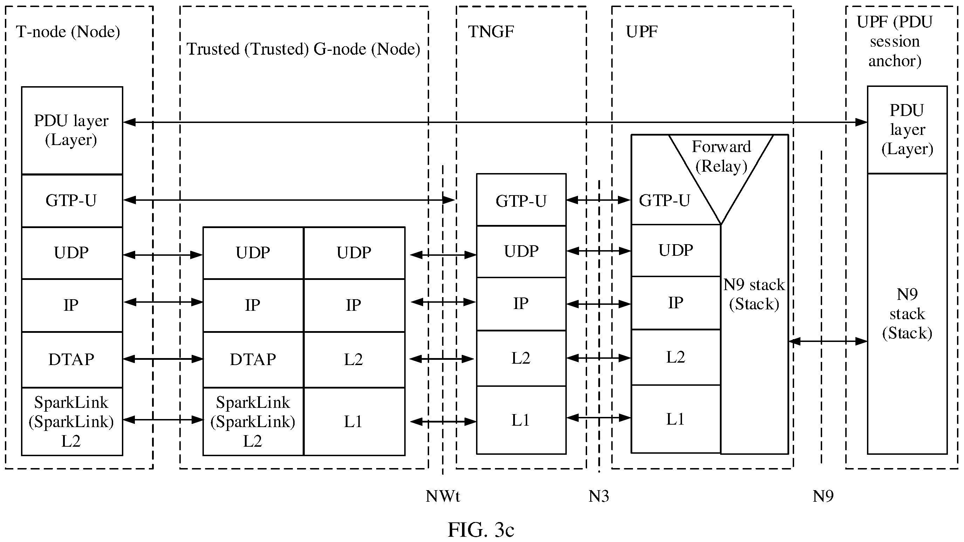

To reduce complexity of the protocol stack of the first node and signaling interaction between the first node and the gateway, the IPSec may be omitted in the user plane protocol stack and the control plane protocol stack of the first node and the gateway (with reference to FIG. 3a to FIG. 3c). In this way, protocol stacks of the first node and the gateway may be thin. After an EAP connection is released, the first node and the gateway may exchange communication information according to a general packet radio service tunneling protocol (general packet radio service tunneling protocol, GTP) user plane (user plane) protocol (which may be referred to as GTP-U for short). However, there is a security risk in the communication information exchange between the first node and the gateway according to GTP-U, that is, security of the exchanged information cannot be ensured.

In view of this, this application provides a communication method. The communication method can improve security of information transmission between a first node and a gateway. The communication method may be applied to the communication system shown in FIG. 1. The first node may be the first node 101 in FIG. 1, and the gateway may be the gateway 103 in FIG. 1.

In the following description, the first node belongs to a first communication system, the gateway belongs to a second communication system, and the first communication system and the second communication system are two different communication systems. For detailed descriptions of the first communication system and the second communication system, refer to the foregoing related descriptions. Details are not described herein again.

### Embodiment 1

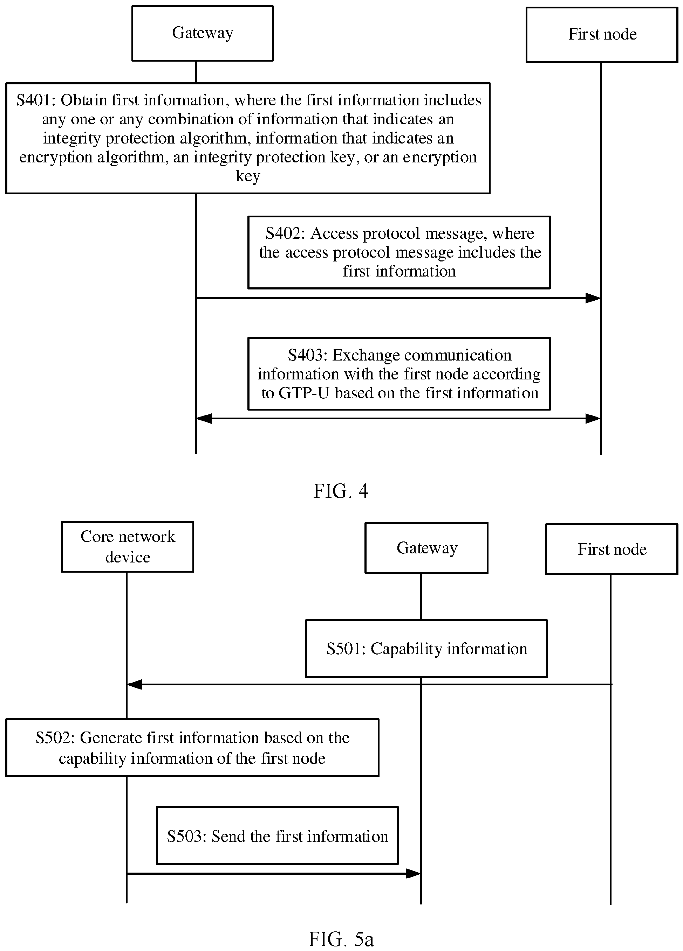

FIG. 4 is a schematic method flowchart of a communication method according to this application. The method includes the following steps.

Step 401: A gateway obtains first information.

The first information is used for security- and/or integrity-based communication between a first node and the gateway. It may also be understood that when the first node and the gateway exchange communication information, the first information is used to perform integrity and/or encryption protection on the information. It is equivalent to that a secure channel is established between the gateway and the first node based on the first information, and the information exchanged between the gateway and the first node is transmitted in the secure channel. The first information may also be referred to as a security parameter.

In a possible implementation, the first information may include any one or any combination of information that indicates an integrity protection algorithm, information that indicates an encryption algorithm, an integrity protection key, or an encryption key. The integrity protection algorithm may include but is not limited to an EPS integrity algorithm (EPS Integrity Algorithm, EIA) 0, an EIA 1, an EIA 2, an EIA 3, or the like. The EIA 0 is a null algorithm, that is, no encryption is performed, and the EIA 0 is usually used in emergency call scenarios that do not require authentication. The EIA 1 is named SNOW 3G. The EIA 2 is named AES. The EIA 3 is named Zuc stream cipher, and is an integrity algorithm supported by the first node. The encryption algorithm may include but is not limited to an EPS encryption algorithm (EPS Encryption Algorithm, EEA) 0, an EEA 1, or an EEA 2. The EEA 0 is a null encryption algorithm. The EEA 1 is a SNOW 3G encryption algorithm. The EEA 2 is an AES encryption algorithm.

For example, the first information may include any one or any combination of the EIA 0, the EEA 0, the integrity protection key, or the encryption key. The EIA 0 is the information that indicates the integrity protection algorithm, and the EEA 0 is the information that indicates the encryption algorithm. It should be noted that a specific integrity protection algorithm and a specific encryption algorithm that are used may be defined in a protocol, or may be pre-agreed by the gateway and the first node. This is not limited in this application.

Further, optionally, the first information may be control plane security information. Specifically, the control plane security information may include at least one or a combination of information that indicates a control plane integrity protection algorithm, information that indicates a control plane encryption algorithm, a control plane integrity protection key, or a control plane encryption key. Based on the control plane security information, a control plane secure channel between the first node and the gateway is established.

Alternatively, the first information may be user plane security information. Specifically, the user plane security information may include at least one or a combination of information that indicates a user plane integrity protection algorithm, information that indicates a user plane encryption algorithm, a user plane integrity protection key, or a user plane encryption key. Based on the user plane security information, a user plane secure channel between the first node and the gateway is established.

It should be noted that the user plane security information and the control plane security information may be the same. For example, the user plane integrity protection algorithm and the control plane integrity protection algorithm are the same, the control plane encryption algorithm and the user plane encryption algorithm may be the same, the control plane integrity key and the user plane integrity key are the same, and the control plane encryption key and the user plane encryption key may be the same. In other words, the user plane security information and the control plane security information may be same information. Alternatively, the user plane security information and the control plane security information are different. This is not limited in this application.

For example, the following shows two possible implementations in which the gateway obtains the first information.

Implementation 1: The gateway directly obtains the first information from a core network device.

It should be noted that the core network device and the gateway belong to a same communication system. In other words, both the core network device and the gateway belong to the second communication system. With reference to FIG. 1, the core network device may be the core network device 104 in FIG. 1.

FIG. 5a is a schematic flowchart of a method for obtaining the first information by the gateway according to this application. The method includes the following steps.

Step 501: The first node sends capability information to the core network device through the gateway. Correspondingly, the core network device receives the capability information from the first node.

The capability information includes but is not limited to information indicating that the first node supports the integrity protection algorithm and/or the encryption algorithm between the first node and the gateway. In other words, a capability of the first node includes but is not limited to supporting encryption protection and/or integrity protection of the information exchanged between the first node and the gateway. It should be noted that security is enabled between the first node and the gateway. The security enabling means that the information exchanged between the first node and the gateway can be protected. It should be understood that the security enabling between the first node and the gateway is optional. To be specific, security protection may be selected, or security protection may not be selected.

In a possible implementation, the capability information may be carried in a NAS message. In other words, the first node may send the capability information of the first node to the core network device by using the NAS/EAP-5G message. In another possible implementation, the capability information may be carried in an EAP-5G message. In other words, the first node may send the EAP-5G message including the capability information of the first node to the gateway, and the gateway forwards the EAP-5G message including the capability information of the first node to the core network device.

Step 502: The core network device determines the first information based on the capability information of the first node.

In a possible implementation, if the capability information reported by the first node in step 501 includes the information indicating that the first node supports the integrity protection algorithm between the first node and the gateway, the core network device may determine that the first information includes the information that indicates the integrity protection algorithm. If the capability information reported by the first node in step 501 includes the information indicating that the first node supports the encryption algorithm between the first node and the gateway, the core network device may determine that the first information includes the information that indicates the encryption algorithm. If the capability information reported by the first node in step 501 includes the information indicating that the first node supports the integrity protection algorithm between the first node and the gateway and the information that indicates the encryption algorithm, the core network device may determine that the first information includes the information that indicates the integrity protection algorithm and the information that indicates the encryption algorithm.

It should be noted that the core network device may alternatively determine the capability information of the first node in another manner, for example, in an implicit manner. Specifically, for example, when determining whether the first node supports the integrity protection algorithm between the first node and the gateway, the core network device may determine, based on a type of the first node (for example, a SparkLink terminal) and a gateway type (for example, a trusted gateway), that the first node supports the integrity protection algorithm between the first node and the gateway, and consider that the first node supports an integrity protection algorithm (for example, the EIA 1/EIA 2/EIA 3 algorithm) defined by SparkLink and 5G in a converged manner. Further, the core network device may send the selected integrity protection algorithm to the gateway.

Step 503: The core network device sends the first information to the gateway. Correspondingly, the gateway receives the first information from the core network device.

In a possible implementation, the core network device may include the first information in an N2 initial context setup request message. In other words, the core network device sends the N2 initial context setup request message to the gateway, where the N2 initial context setup request message includes the first information.

Implementation 2: The gateway generates the first information based on second information obtained from a core network device.

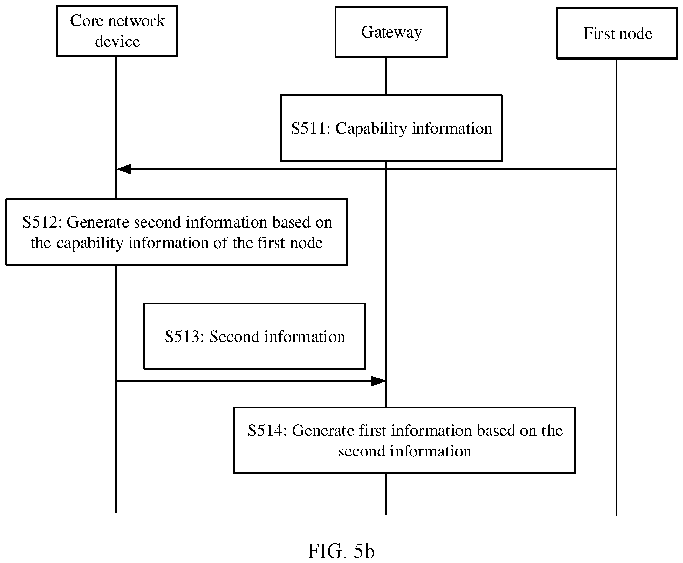

FIG. 5b is a schematic flowchart of another method for obtaining the first information by the gateway according to this application. The method includes the following steps.

Step 511: The first node sends capability information to the core network device through the gateway. Correspondingly, the core network device receives the capability information from the first node.

For step 511, refer to the descriptions of step 501. Details are not described herein again.

Step 512: The core network device generates the second information based on the capability information of the first node.

For step 512, refer to the descriptions of step 502. Details are not described herein.

Step 513: The core network device sends the second information to the gateway. Correspondingly, the gateway receives the second information from the core network device.

Specifically, the core network device may send, to the gateway, an N2 initial context setup request message that carries the second information.

Step 514: The gateway generates the first information based on the second information.

In a possible implementation, the gateway may generate the first information based on the second information and a preset algorithm. For example, the first information includes the integrity protection key, and the second information includes a first initial key. The gateway derives the integrity protection key based on the initial key from the core network device and the preset algorithm. For example, the first information includes the encryption key, and the second information includes a second initial key. The gateway derives the encryption key based on the second initial key received from the core network device and the preset algorithm. For example, the first information includes the integrity protection algorithm, and the second information includes a first initial algorithm. The gateway derives the integrity protection algorithm based on the initial algorithm from the core network device and the preset algorithm. For example, the first information includes the encryption algorithm, and the second information includes a second initial algorithm. The gateway derives the encryption algorithm based on the second initial algorithm received from the core network device and the preset algorithm.

It should be noted that the foregoing manner in which the gateway generates the first information based on the second information is merely an example, or there may be another possible implementation. This is not limited in this application.

Step 402: The gateway sends, to the first node, an access protocol message that carries the first information. Correspondingly, the first node receives the access protocol message from the gateway.

The access protocol message may be an access protocol message of the first communication system, or may be an access protocol message of the second communication system. The access protocol message is mainly used for information (for example, one or more of the foregoing first information, and priority information, QoS information, or tunnel information in the following) exchange between the first node in the first communication system and the gateway in the second communication system. Specifically, the access protocol message may carry one or more of PDU session related information, QoS information, tunnel information, or information for updating PDU session related information between the first node in the first communication system and the gateway in the second communication system.

For example, the access protocol message may include, but is not limited to, an EAP-5G message or an SLAP message. In a possible implementation, the first information may be carried in the EAP-5G message or the SLAP message. It may also be understood that the first information is added to the EAP-5G message or the SLAP message. It should be understood that the EAP-5G message is an extension of an EAP message, and is defined in a 3rd Generation Partnership Project (3rd Generation Partnership Project, 3GPP). The SLAP message is mainly used for information exchange between a T node in a current or future SparkLink wireless communication system and the gateway. The information exchange may include but is not limited to one or more of PDU session related information exchange, QoS information exchange, tunnel information exchange, PDU session related information update, or the like between the T node and the gateway. To clarify the solution, the SLAP message may alternatively be replaced with an intersystem interaction message (which may be referred to as an access protocol message), and may be configured to carry one or more of the PDU session related information, the QoS information, the tunnel information, the PDU session related information update, and the like between the first node in the first communication system and the gateway in the second communication system.

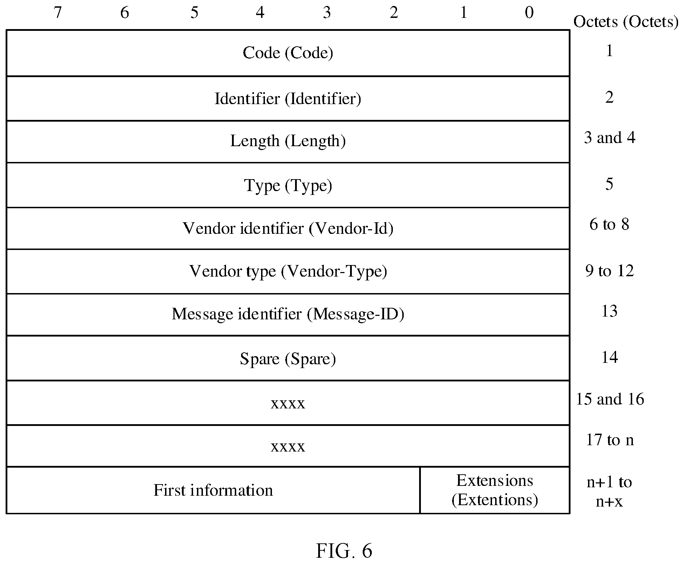

FIG. 6 shows a frame format of an EAP/EAP-5G message that carries the first information according to this application. The EAP-5G message includes a code (Code) field, an identifier (Identifier) field, a length (Length) field, a type (Type) field, a vendor identifier (Vendor-ID) field, a vendor type (Vendor-Type) field, a message identifier (Message-ID) field, a spare field, an xxxx field, the first information, and an extensions field. The code field indicates a type of the EAP-5G message (for example, any one of a request (1) message, a response (2) message, a success (3) message, and a failure (4) message). The identifier field indicates matching between a response (Response) packet and a request (Request) packet. The vendor ID field may indicate a 3GPP organization identifier, for example, 10415. The vendor type field identifies an EAP-5G method identifier. The type field indicates a request/response type. The extensions field indicates that other extensible information may be carried. The message ID is used to identify a type of the EAP-5G message, for example, 5G-start (1), 5G-NAS (2), or 5G-Notification (3). The length field indicates a byte length of the EAP-5G message, for example, a quantity of bytes. For the frame format in FIG. 6, if the code is set to 2, the message is identified as a response (response) message. If the code is set to 1, the message is identified as a request message. The message ID may be set to 5G-Notification, 5G-start, 5G-Stop, or 5G-NAS. It may also be understood that the code indicates whether the message is a request message or a response message, and the message ID indicates whether the message is a 5G-Start message, a 5G-NAS message, or a 5G-Notification message.

In a possible implementation, the EAP-5G message may include but is not limited to an EAP-Request/5G-Start message, an EAP-Response/5G-NAS message, an EAP-Request/5G-NAS message, and an EAP-Request/5G-Notification message. The EAP-Request/5G-Notification message is used as an example. EAP-Response/5G-Notification is integrated, and the slash (/) merely indicates that the message is determined based on the code and the message ID.

Specific frame structures of the EAP-Request/5G-Start message, the EAP-Response/5G-NAS message, the EAP-Request/5G-NAS message, and the EAP-Request/5G-Notification message are slightly different. A specific difference lies in the xxxx field in FIG. 6. For example, if FIG. 6 shows an EAP-Request/SG-Notification message and an EAP-Request/5G-Start message, the xxxx field is null. In other words, there is no xxxx field. If FIG. 6 shows an EAP-Response/5G-NAS message, the xxxx field may indicate an AN parameter length (AN-parameters length), an AN parameter (AN-parameters), a NAS-PDU length, and a NAS-PDU. If FIG. 6 shows an EAP-Request /5G-NAS message, the xxxx field may indicate a NAS-PDU length and a NAS-PDU. If FIG. 6 shows an EAP-Request/5G-Notification message, the xxxx field may indicate an AN parameter length and an AN parameter. The AN-parameters indicates access network parameter information (for example, a selected public land mobile network (public land mobile network, PLMN)), requested network slice selection assistance information (network slice selection assistance information, NSSAI), an identifier of the first node, and the like.

It should be noted that the first information may be located at any location in the frame of the EAP-5G message, and may occupy a quantity of bits of any size. This is not limited in this application.

In a possible implementation, for a frame format of the SLAP message that carries the first information, refer to the following descriptions of an SLAP message format.

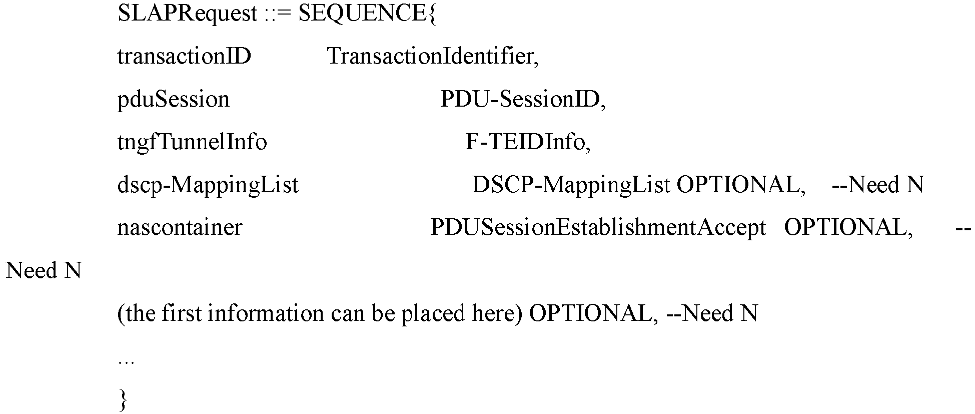

The following example shows possible cases in which the gateway sends, to the first node, the first information carried in the access protocol message.

Case 1: The first information includes information that indicates an integrity protection algorithm.

The gateway may send, to the first node based on the access protocol message, the information that indicates the integrity protection algorithm. Correspondingly, the first node may receive the access protocol message from the gateway, parse the access protocol message to obtain the information that indicates the integrity protection algorithm, and determine the integrity protection algorithm based on the information that indicates the integrity protection algorithm.

Case 2: The first information includes information that indicates an encryption algorithm.

The gateway may send, to the first node based on the access protocol message, the information that indicates the encryption algorithm. Correspondingly, the first node may receive the access protocol message from the gateway, parse the access protocol message to obtain the information that indicates the encryption algorithm, and may determine the encryption algorithm based on the information that indicates the encryption algorithm.

Case 3: The first information includes information that indicates an integrity protection algorithm and information that indicates an encryption algorithm.

The gateway may send, to the first node based on the access protocol message, the information that indicates the integrity protection algorithm and the information that indicates an encryption algorithm, or the gateway may send, to the first node based on the access protocol message, one of the information that indicates the integrity protection algorithm and the information that indicates an encryption algorithm, and the other piece of information may be pre-agreed by the gateway and the first node. Correspondingly, the first node may receive the access protocol message from the gateway, and parse the access protocol message to obtain the information that indicates the integrity protection algorithm and the information that indicates the encryption algorithm, so as to determine the encryption algorithm and the integrity protection algorithm. Alternatively, the first node parses the access protocol message to obtain one of the information that indicates the integrity protection algorithm and the information that indicates the encryption algorithm, and may determine the encryption algorithm and the integrity protection algorithm based on one of the parsed information that indicates the integrity protection algorithm or the information that indicates the encryption algorithm.

Case 4: The first information includes an integrity protection algorithm, an encryption algorithm, an integrity protection key, and an encryption key.

The gateway may send, to the first node based on the access protocol message, information that indicates the integrity protection algorithm, information that indicates the encryption algorithm, the integrity protection key, and the encryption key. Correspondingly, the first node may receive the access protocol message from the gateway, and parse the access protocol message to obtain the information that indicates the integrity protection algorithm, the information that indicates the encryption algorithm, the integrity protection key, and the encryption key.

It should be noted that the first information may further include any three of the information that indicates the integrity protection algorithm, the information that indicates the encryption algorithm, the integrity protection key, and the encryption key, or include at least one of the integrity protection key and the encryption key. Details are not listed one by one herein again.

In a possible implementation, the access protocol message may further include a correspondence between the first information and a QoS flow. For example, same first information may be configured for all QoS flows in the PDU session. For another example, different first information may be configured for different QoS flows in the PDU session. It should be noted that the correspondence between the first information and the QoS flow may be carried in the EAP-5G message, and may be updated subsequently (for example, after an EAP connection is released) by using the SLAP message.

Step 403: The gateway exchanges communication information with the first node according to GTP-U based on the first information. Correspondingly, the first node exchanges the communication information with the gateway according to GTP-U based on the first information.

The information exchanged between the gateway and the first node includes but is not limited to control plane signaling, user plane data, or the like.

Specifically, GTP-U is between the first node and the gateway. The gateway may perform integrity protection and/or encryption on information that needs to be exchanged, and encapsulate integrity protection and/or encrypted information into GTP-U for transmission to the first node. Correspondingly, the first node may encapsulate, into GTP-U, the information that needs to be exchanged for transmission to the gateway.

It should be understood that if the first information is carried in the EAP-5G message, the foregoing step 402 is performed before the EAP connection is released. Before the EAP connection is released, the gateway and the first node may exchange the communication information by using the EAP connection. After the EAP connection is released, the gateway and the first node may exchange the communication information according to GTP-U. If the first information is carried in the SLAP message, both step 402 and step 403 are performed after the EAP connection is released.

It can be learned from the foregoing step 401 to step 403 that, the gateway may perform, based on the first information, security and/or integrity protection on the information exchanged according to GTP-U with the first node. This is equivalent to establishing a secure channel between the first node and the gateway based on the first information. Therefore, security of the exchanged communication information can be improved when the first node and the gateway exchange the communication information according to GTP-U. It may also be understood that, based on the foregoing solution, complexity of a protocol stack of the first node and a signaling interaction procedure between the first node and the gateway can be reduced, and security of the communication information exchanged between the first node and the gateway can be ensured. For example, the first information is user plane security information. This is equivalent to establishing a user plane secure channel between the first node and the gateway, so that security of user plane data exchanged between the first node and the gateway can be improved. For another example, the first information is control plane security information. This is equivalent to establishing a control plane secure channel between the first node and the gateway, so that security of control plane signaling exchanged between the first node and the gateway can be improved.

### Embodiment 2

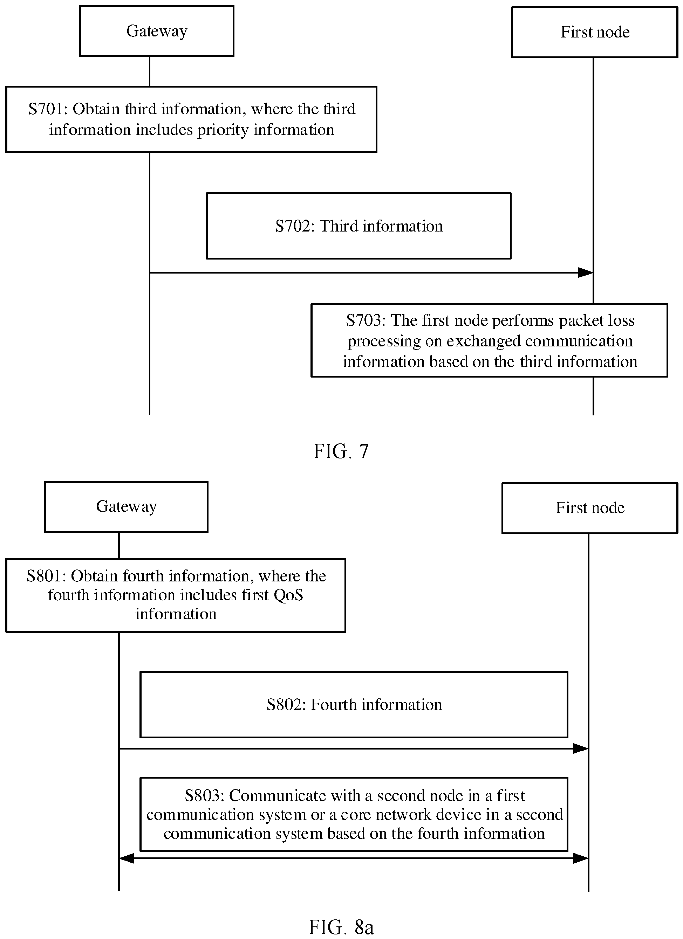

To reduce an information exchange delay, a device fault recovery delay, and system complexity, a transmission control protocol (transmission control protocol, TCP) connection establishment process (In TCP transmission, handshake, acknowledgment, window sliding mechanism, retransmission, and congestion control are used to ensure reliability of information exchanged between a first node and a gateway) may be omitted between the first node and the gateway, and communication information is exchanged according to a user datagram protocol (user datagram protocol, UDP). However, reliability of exchanging communication information according to the UDP is low. To improve reliability of the information exchanged between the first node and the gateway as much as possible, the UDP may be enhanced. For details, refer to the description in FIG. 7.

FIG. 7 is a schematic method flowchart of another communication method according to this application. The method includes the following steps.

Step 701: The gateway obtains third information.

The third information includes priority information, and the priority information indicates a priority of control plane signaling and/or a priority of user plane data.

In a possible implementation, different priorities may be configured for the control plane signaling and the user plane data. For example, a priority of the control plane signaling is high, and a priority of the user plane data is low. Further, the control plane signaling may further include a non-access stratum (non-access stratum, NAS) message, short-distance control signaling, and the like. A priority of the NAS message may be configured to be higher than that of the short-distance control signaling. In other words, the NAS message can be configured to have a highest priority, the short-distance control signaling can be configured to have a medium priority, and the user plane data can be configured to have a low priority. It should be noted that the control plane signaling and the user plane data correspond to different information types, and different priorities may be configured for different information types.

Further, optionally, the priorities of different information types may be represented by numbers. For example, a larger number indicates a higher priority. Specifically, priority information corresponding to the NAS message may be represented by 3, priority information corresponding to the short-distance control signaling may be represented by 2, and priority information corresponding to the user plane data may be represented by 1. It should be noted that a specific representation manner of the priority information may be predefined in a protocol, or may be pre-agreed by the gateway and the first node. This is not limited in this application.

In a possible implementation, the priority information of the control plane signaling and/or the user plane data may be configured and maintained by the gateway.

Step 702: The gateway sends the third information to the first node. Correspondingly, the first node receives the third information from the gateway.

In a possible implementation, the third information may be carried in an EAP-5G message. In other words, the third information may be added to the EAP-5G message. For a frame format of the EAP-5G message that carries the third information, refer to the foregoing description in FIG. 6. The first information in FIG. 6 may be replaced with the third information. For detailed description of the EAP-5G message, refer to the foregoing related description. Details are not described herein again.

In another possible implementation, the third information may be carried in an SLAP message. In other words, the third information may be added to the EAP-5G message or the SLAP message. For a frame format of the SLAP message that carries the third information, refer to the foregoing related description. The first information in the SLAP message may be replaced with the third information. For detailed description of the SLAP message, refer to the foregoing related description. Details are not described herein again.

Step 703: The first node performs packet loss processing on the exchanged information based on the third information.

In a possible implementation, when congestion occurs, the first node may perform congestion control on the control plane signaling and/or the user plane data based on the priority information. Specifically, a data packet corresponding to an information type with a lower priority may be first discarded. For example, a message ID in the EAP-5G message may be used to distinguish whether the message is a NAS message or short-distance control signaling. It should be understood that, when the first node performs packet loss processing based on the third information, a data packet corresponding to an information type with a higher priority is discarded later.

Based on the foregoing step 701 to step 703, the communication information may be exchanged between the first node and the gateway according to the UDP, and when congestion occurs, the packet loss processing may be performed based on the priority information to alleviate or even resolve a congestion problem. In this way, a packet loss rate is reduced, and reliability of the information exchanged between the first node and the gateway can be improved.

### Embodiment 3

To implement QoS control on communication between nodes in a first communication system and QoS control on communication between a first node and a core network device in a second communication system, a gateway may send QoS information to the first node. For details, refer to the following description in FIG. 8a.

FIG. 8a is a schematic flowchart of another communication method according to this application. The communication method includes the following steps.

Step 801: The gateway obtains fourth information.

The fourth information includes first QoS information (or referred to as a first QoS mapping relationship), and the first QoS information is used for the communication between the nodes in the first communication system, and/or the communication between the first node and the core network device. Specifically, the first QoS information may be used to control a QoS during the communication between the nodes in the first communication system, and/or control a QoS during the communication between the first node and the core network device.

With reference to FIG. 1, the first communication system to which the first node belongs includes a first node and a second node, and the fourth information may be used to control a QoS of communication between the first node and the second node, or may be used to control a QoS of communication between the first node and the core network device.

For example, the first QoS information may be a QoS parameter of a converged communication system, including but not limited to one or more of a code, a port number, a priority, a delay, a packet loss rate, a throughput rate, a guaranteed bit rate (guaranteed bit rate, GBR), a non-guaranteed bit rate (non-guaranteed bit rate, NGBR), a maximum flow bit rate (maximum flow bit rate, MFBR), an allocation and retention priority (allocation and retention priority, ARP), fifth generation communication system core network (the fifth generation communication system core, 5GC) notification control (the 5GC is notified when the QoS does not meet a requirement), and short-range notification control (a peer node is notified when the QoS does not meet a requirement).

In a possible implementation, the first QoS information may include the QoS parameter in the foregoing example, or may include a QoS index, and one QoS index may be corresponding to one set of specific QoS parameters.

The following example shows three possible implementations in which the gateway obtains the first QoS information.

Implementation 1: The core network device sends an N2 initial context request message to the gateway, where the N2 initial context request message includes the first QoS information.

Implementation 2: The core network device sends an N2 initial context request message to the gateway, where the N2 initial context request message includes second QoS information, and the gateway may generate the first QoS information based on the second QoS information and link status information that are delivered by the core network device. The link status information may include, but is not limited to, SparkLink short-range air interface status information and/or link status information between the first node and the core network device. The SparkLink short-range air interface status information includes one or more of reference signal received power (reference signal received power, RSRP), a reference signal received quality (reference signal received quality, RSRQ), a signal to interference plus noise ratio (signal to interference plus noise ratio, SINR), a channel quality indicator (channel quality indicator, CQI), a precoding matrix indicator (precoding matrix indicator, PMI), a rank indicator (rank indicator, RI), and a timestamp. The link status information between the first node and the core network device includes one or more of a round-trip time (round-trip time, RTT), a packet loss rate, a jitter, and a timestamp.

In the implementation 2, more control rights may be granted to the gateway, to increase processing flexibility of the gateway.

Implementation 3: The gateway may automatically generate the first QoS information based on a link status of the first node.

Step 802: The gateway sends the fourth information to the first node. Correspondingly, the first node receives the fourth information from the gateway.

In a possible implementation, the fourth information may be carried in an EAP-5G message. In other words, the fourth information may be added to the EAP-5G message. For a frame format of the EAP-5G message that carries the fourth information, refer to the foregoing description in FIG. 6. The first information in FIG. 6 may be replaced with the fourth information. For detailed description of the EAP-5G message, refer to the foregoing related description. Details are not described herein again.

In another possible implementation, the fourth information may be carried in an SLAP message. In other words, the fourth information may be added to the EAP-5G message or the SLAP message. For a frame format of the SLAP message that carries the fourth information, refer to the foregoing related description. The first information in the SLAP message may be replaced with the fourth information. For detailed description of the SLAP message, refer to the foregoing related description. Details are not described herein again.

Step 803: The first node communicates with the second node in the first communication system or the core network device in the second communication system based on the fourth information.

With reference to FIG. 1, the first node controls, based on the fourth information, a QoS of communication between the first node and the second node included in the first communication system; and/or the first node controls, based on the fourth information, a QoS of communication between the first node and the core network devices.

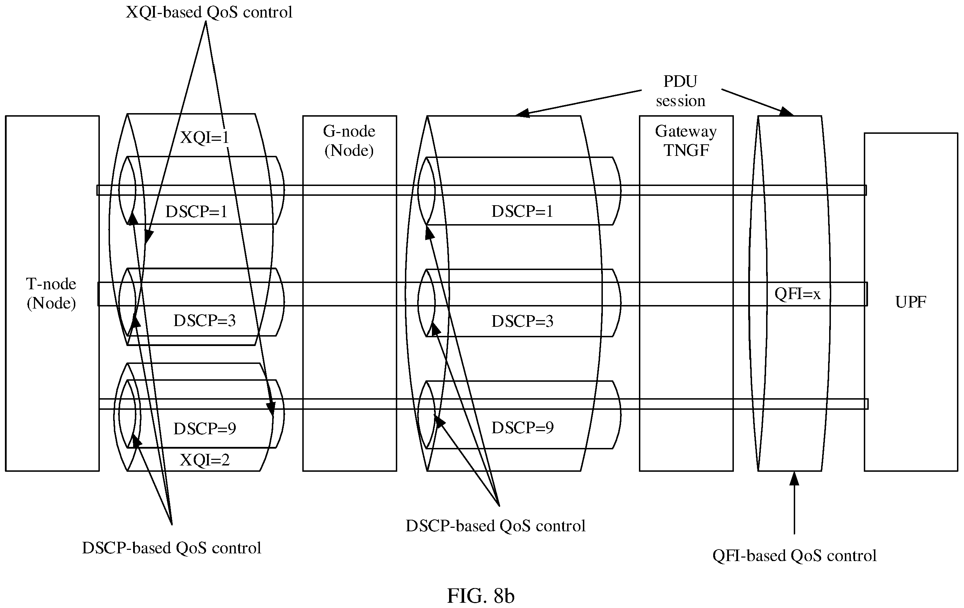

Generally, end-to-end QoS control is divided into three parts. With reference to FIG. 8b, a first part is QoS control based on a QoS flow identifier (QoS flow ID, QFI) between a UPF and the gateway (TNGF). A second part is QoS control based on a differentiated service code point (differentiated service code point, DSCP) (with a value ranging from 0 to 63) between the gateway (TNGF) and the second node (G-Node). A third part is QoS control based on a DSCP and a SparkLink service quality identifier XQI between the second node (G-Node) and the first node (T-Node).

For an uplink data packet, the first node determines a QFI of the uplink data packet based on a QoS rule (rule(s)), determines a DSCP value of the data packet based on a mapping relationship between the QFI and the DSCP, and adds the DSCP to an Internet protocol (internet protocol, IP) packet header of the data packet. In addition, the first node determines, based on a mapping relationship between the DSCP and the XQI and a mapping relationship between the XQI and the QoS parameter of the first communication system, an XQI value corresponding to the data packet, and performs QoS control on an air interface of the first communication system on the data packet based on the QoS parameter of the first communication system corresponding to the XQI.

In a possible implementation, the first node and the gateway may also map the priority information to QoS information corresponding to an access stratum. Further, the access stratum may transmit data based on the QoS information, for example, establish an access stratum channel and transmit data based on a requirement such as a priority and a delay.

It can be learned from the foregoing step 801 to step 803 that the gateway may implement end-to-end QoS control by sending the first QoS information to the first node.

### Embodiment 4

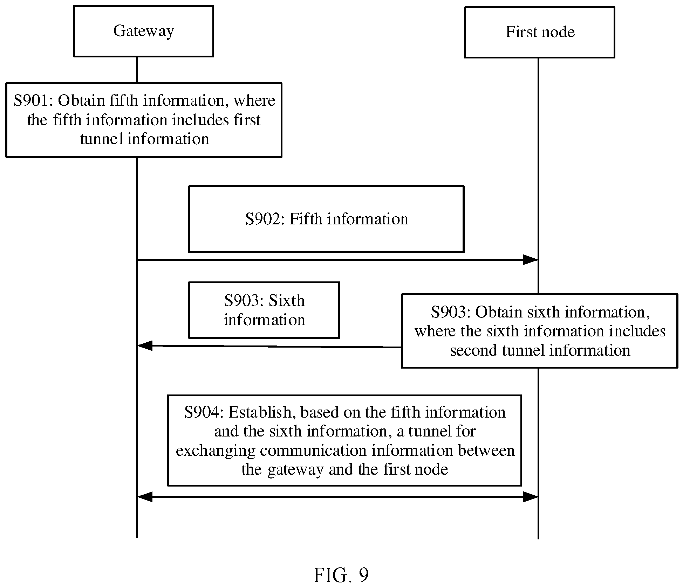

When control plane signaling is transmitted between a first node and a gateway according to GTP-U after an EAP connection is released, a GTP-U tunnel needs to be established between the first node and the gateway. If the control plane signaling is not required, the GTP-U tunnel can be removed. In other words, the GTP-U tunnel may be dynamically established or removed between the first node and the gateway based on a requirement. For details, refer to the description in FIG. 9 below. It should be understood that before the EAP connection is released, the control plane signaling (for example, a NAS message) may be encapsulated in EAP message for transmission.

FIG. 9 is a schematic method flowchart of still another communication method according to this application. The communication method includes the following steps.

Step 901: The gateway obtains fifth information.

The fifth information includes first tunnel information, and the first tunnel information is used to establish the GTP-U tunnel through which the first node exchanges information with the gateway. It should be understood that the GTP-U tunnel is a temporary tunnel, and may be dynamically established or removed based on a requirement. The GTP-U tunnel may also be understood as a channel for exchanging communication information between the first node and the gateway.

In a possible implementation, the first tunnel information may include but is not limited to an IP address of the gateway and a tunnel identifier (tunnel endpoint identifier, TEID) of the gateway.

Step 902: The gateway sends the fifth information to the first node. Correspondingly, the first node receives the fifth information from the gateway.

In a possible implementation, the fifth information may be carried in an EAP-5G message. In other words, the fifth information may be added to the EAP-5G message. For a frame format of the EAP-5G message that carries the fifth information, refer to the foregoing description in FIG. 6. The first information in FIG. 6 may be replaced with the fifth information. For detailed description of the EAP-5G message, refer to the foregoing related description. Details are not described herein again.

In another possible implementation, the fifth information may be carried in an SLAP message. In other words, the fifth information may be added to the EAP-5G message or the SLAP message. For a frame format of the SLAP message that carries the fifth information, refer to the foregoing related description. The first information in the SLAP message may be replaced with the fifth information. For detailed description of the SLAP message, refer to the foregoing related description. Details are not described herein again.

Step 903: The first node obtains sixth information, and sends the sixth information to the gateway. Correspondingly, the gateway may receive the sixth information from the first node.

The sixth information includes second tunnel information, and the second tunnel information includes an IP address of the first node and a TEID of the first node.

Step 904: Establish, based on the fifth information and the sixth information, a tunnel for exchanging the communication information between the gateway and the first node.

In a possible implementation, the gateway may establish, based on the sixth information, the tunnel for exchanging the communication information between the gateway and the first node. It may also be understood that the gateway may determine, based on the sixth information, peer information (for example, a peer address) for exchanging the communication information, so as to determine to which the exchanged information is to be sent.

In a possible implementation, the first node establishes, based on the fifth information, a tunnel for exchanging the communication information between the first node and the gateway. It may also be understood that the first node may determine, based on the fifth information, peer information (for example, a peer address) for exchanging the communication information, so as to determine to which the exchanged information is to be sent.

Based on the foregoing step 901 to step 904, the gateway and the first node may dynamically establish or remove the temporary tunnel between the first node and the gateway based on the fifth information and the sixth information.

### Embodiment 5

In a possible implementation, at least one of third information, fourth information, or fifth information may also be carried in an access protocol message. Further, optionally, the access protocol message further includes indication information that indicates at least one of first information, the third information, the fourth information, or the fifth information.

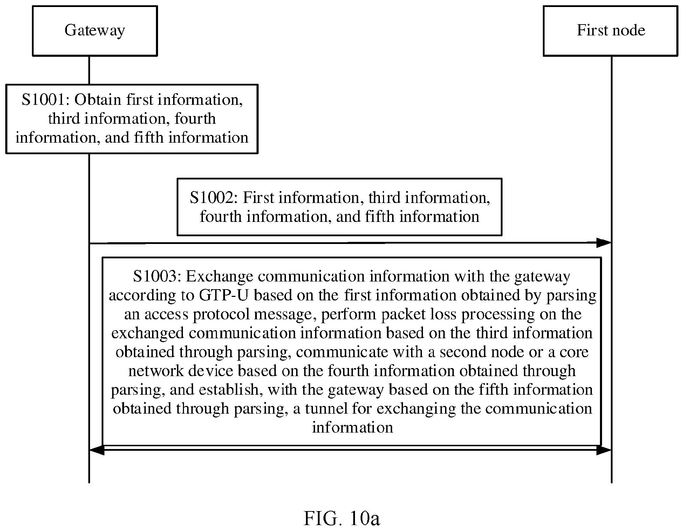

FIG. 10a is a schematic method flowchart of still another communication method according to this application. In the method, that the access protocol message carries the first information, the third information, the fourth information, and the fifth information is used as an example. The method includes the following steps.

Step 1001: A gateway obtains the first information, the third information, the fourth information, and the fifth information.

For the description of step 1001, refer to the description of obtaining the first information, the third information, the fourth information, and the fifth information by the gateway. Details are not described herein again.

Step 1002: The gateway sends the access protocol message to a first node. Correspondingly, the first node receives the access protocol message from the gateway.

The access protocol message includes the first information, the third information, the fourth information, and the fifth information, and may further include the indication information.

In a possible implementation, one piece of the indication information may indicate one of the first information, the third information, the fourth information, or the fifth information. For example, the indication information may be identified by two bits. For example, 00 may indicate that the first information is placed after the indication information, 01 may indicate that the third information is placed after the indication information, 10 may indicate that the fourth information is placed after the indication information, and 11 may indicate that the fifth information is placed after the indication information. That is, 00 is indication information that indicates the first information, 01 is indication information that indicates the third information, 10 is indication information that indicates the fourth information, and 11 is indication information that indicates the fifth information. Further, optionally, three bits may indicate that corresponding information is not placed after the indication information. Therefore, the corresponding information does not need to be parsed. It should be understood that using three bits to indicate that no information is placed is merely an example. This is not limited in this application.

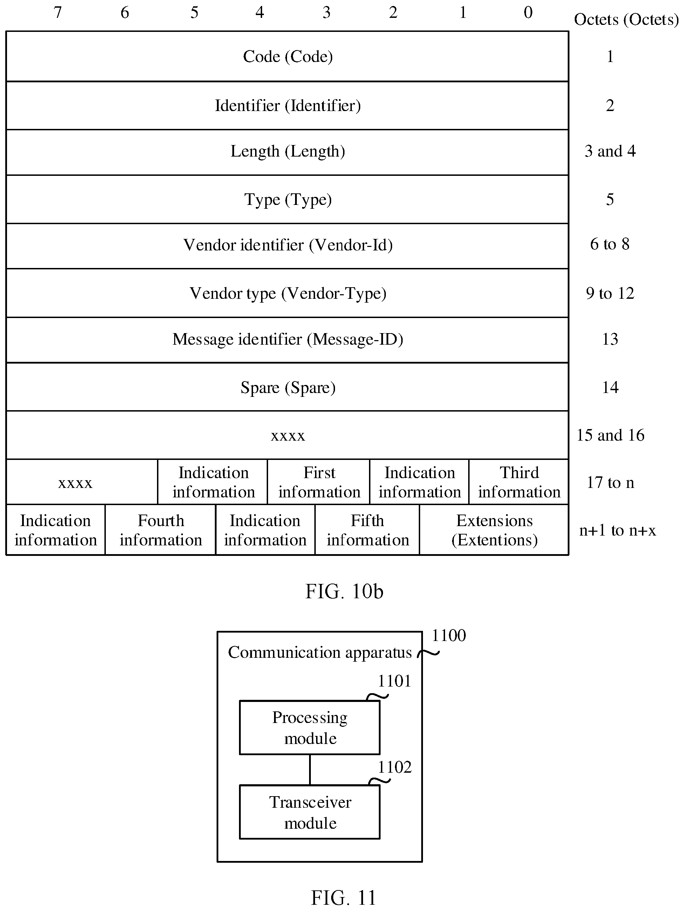

FIG. 10b is a schematic diagram of a frame format of an EAP-5G message that carries first information, third information, fourth information, fifth information, and indication information according to this application. The EAP-5G message includes a code field, an identifier field, a length field, a type field, a vendor ID field, a vendor type field, a message ID field, a spare field, an xxxx field, indication information that indicates first information, first information, indication information that indicates third information, third indication information, indication information that indicates fourth information, fourth indication information, indication information that indicates fifth information, fifth information, and an extensions field. For the code field, the identifier field, the length field, the type field, the vendor ID field, the vendor type field, the message ID field, the spare field, the xxxx field, and the extensions field, refer to the foregoing related description, and details are not described herein again. It should be noted that each piece of indication information and corresponding information may appear in pairs, and locations of different pairs may be interchanged, or may be placed in another field. This is not limited in this application. It should be understood that the frame format that is of the EAP-5G message that carries the first information, the third information, the fourth information, the fifth information, and the indication information and that is shown in FIG. 10b is merely an example. This is not limited in this application.

In still another possible implementation, the indication information may also be reused for the first information, the third information, the fourth information, and the fifth information. For example, the indication information is represented by using four bits. A first bit indicates the first information, a second bit indicates the third information, a third bit indicates the fourth information, and a fourth bit indicates the fifth information. Further, if a value is 0, it indicates that the EAP-5G message does not include the corresponding information, and if a value is 1, it indicates that the EAP-5G message includes the corresponding information. For example, if the indication information is 1111, it indicates that the indication information is sequentially followed by the first information, the third information, the fourth information, and the fifth information. For another example, if the indication information is 1110, it indicates that the indication information is followed by null, the third information, the fourth information, and the fifth information.

It should be noted that a specific form of the indication information may be specified in a protocol, or may be pre-agreed between the first node and the gateway. This is not limited in this application.

In another possible implementation, a frame format of the SLAP message that carries the first information, the third information, the fourth information, the fifth information, and the indication information may be:

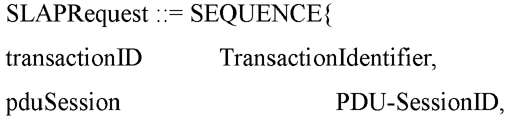

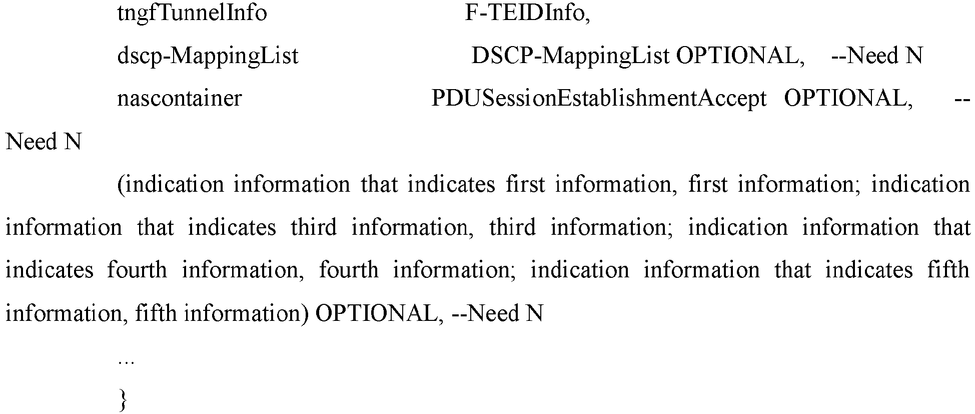

For more detailed description of the access protocol message, refer to the foregoing related description. Details are not described herein again.

Step 1003: The first node exchanges the communication information with the gateway according to GTP-U based on the first information obtained by parsing the access protocol message, and performs packet loss processing on the exchanged information based on the third information obtained by parsing the access protocol message, communicates with a second node in a first communication system or a core network device in a second communication system based on the fourth information obtained by parsing the access protocol message, and establishes, with the gateway based on the fifth information obtained by parsing the access protocol message, a tunnel for exchanging the communication information.

For a specific process, refer to the foregoing related description. Details are not described herein again.

It should be noted that any two of the first information, the third information, the fourth information, and the fifth information may alternatively be carried in the access protocol message, or any three of the first information, the third information, the fourth information, and the fifth information may alternatively be carried in the access protocol message. This is not limited in this application.

It may be understood that, to implement the functions in the foregoing embodiments, the gateway and the first node include corresponding hardware structures and/or software modules for performing each function. A person skilled in the art should be easily aware that, based on the modules and the method steps in the examples described in embodiments disclosed in this application, this application can be implemented by hardware or a combination of hardware and computer software. Whether a function is performed by using hardware or hardware driven by computer software depends on a particular application scenario and design constraint of the technical solutions.

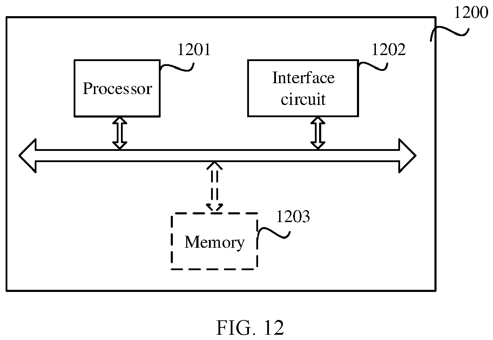

Based on the foregoing content and a same concept, FIG. 11 and FIG. 12 each is a schematic diagram of a possible structure of a communication apparatus according to this application. These communication apparatuses may be configured to implement functions of the first node or the gateway in the foregoing method embodiments, and therefore can also achieve beneficial effects of the foregoing method embodiments. In this application, the communication apparatus may be the first node 101 shown in FIG. 1, or may be the gateway 103 shown in FIG. 1, or may be a module (such as a chip) applied to the first node or the gateway.

As shown in FIG. 11, the communication apparatus 1100 includes a processing module 1101 and a transceiver module 1102. The communication apparatus 1100 is configured to implement functions of the gateway in the foregoing method embodiments shown in FIG. 4 to FIG. 10b.

When the communication apparatus 1100 is configured to implement a function of the gateway in the method embodiment shown in FIG. 4, the processing module 1101 is configured to obtain first information, where the first information includes any one or any combination of information that indicates an integrity protection algorithm, information that indicates an encryption algorithm, an integrity protection key, or an encryption key. The transceiver module 1102 is configured to send an access protocol message to a first node, where the access protocol message includes the first information, and the first node belongs to a first communication system. The processing module 1101 is further configured to exchange communication information with the first node according to a GTP user plane protocol based on the first information.

When the communication apparatus 1100 is configured to implement a function of the first node in the method embodiment shown in FIG. 4, the transceiver module 1102 is configured to receive first information from a gateway, where the first information includes any one or any combination of information that indicates an integrity protection algorithm, information that indicates an encryption algorithm, an integrity protection key, or an encryption key, and the gateway belongs to a first communication system. The processing module 1101 is configured to exchange communication information with the gateway according to a general packet radio service tunneling protocol GTP user plane protocol based on the first information.

For more detailed description of the processing module 1101 and the transceiver module 1102, refer to the related description in the method embodiment shown in FIG. 4. Details are not described herein again.

It should be understood that, in this embodiment of this application, the processing module 1101 may be implemented by a processor or a processor-related circuit component, and the transceiver module 1102 may be implemented by a transceiver or a transceiver-related circuit component.

Based on the foregoing content and a same concept, as shown in FIG. 12, this application further provides a communication apparatus 1200. The communication apparatus 1200 may include a processor 1201 and an interface circuit 1202. The processor 1201 and the interface circuit 1202 are coupled to each other. It can be understood that the interface circuit 1202 may be a transceiver or an input/output interface. Optionally, the communication apparatus 1200 may further include a memory 1203, configured to store instructions executed by the processor 1201, store input data required for running instructions by the processor 1201, or store data generated after the processor 1201 runs instructions.

When the communication apparatus 1200 is configured to implement the method shown in FIG. 4, the processor 1201 is configured to perform a function of the foregoing processing module 1101, and the transceiver 1202 is configured to perform a function of the foregoing transceiver module 1102.

When the foregoing communication apparatus is a chip applied to the first node, the chip of the first node implements a function of the first node in the foregoing method embodiment. The chip of the first node receives information from another module (for example, a radio frequency module or an antenna) in the first node, where the information is sent by a gateway to the first node. Alternatively, the chip of the first node sends information to another module (for example, a radio frequency module or an antenna) in the first node, where the information is sent by the first node to a gateway.

When the foregoing communication apparatus is a chip applied to the gateway, the chip of the gateway implements a function of the gateway in the foregoing method embodiment. The chip of the gateway receives information from another module (for example, a radio frequency module or an antenna) in the gateway, where the information is sent by the first node to the gateway. Alternatively, the chip of the gateway sends information to another module (for example, a radio frequency module or an antenna) in the gateway, where the information is sent by the gateway to the first node.

Based on the foregoing content and a same concept, this application provides a communication system. The communication system may include the foregoing one or more first nodes and one or more gateways. The first node may perform any method on a first node side, and the gateway may perform any method on a gateway side. For possible implementations of the gateway and the first node, refer to the foregoing description. Details are not described herein again.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in the embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a gateway or a first node. Certainly, the processor and the storage medium may alternatively exist in the gateway or the first node as a discrete component.

All or some of the foregoing embodiments may be implemented by using software, hardware, firmware, or any combination thereof. When software is used to implement the embodiments, the embodiments may be implemented entirely or partially in a form of a computer program product. The computer program product includes one or more computer programs and instructions. When the computer programs or instructions are loaded and executed on a computer, all or some of the processes or functions in embodiments of this application are executed. The computer may be a general-purpose computer, a special-purpose computer, a computer network, a gateway, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. The term "and/or" describes an association relationship between associated objects and may indicate three relationships. For example, A and/or B may indicate the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. In addition, in this application, the term "for example" is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and the like are used to distinguish between similar objects, but do not necessarily indicate a specific order or sequence. In addition, the terms "include", "have", and any variant thereof are intended to cover non-exclusive inclusion, for example, include a series of steps or modules. Methods, systems, products, or devices are not necessarily limited to those steps or modules that are expressly listed, but may include other steps or modules that are not expressly listed or that are inherent to such processes, methods, products, or devices.

It is clear that, a person skilled in the art can make various modifications and variations to this application without departing from the protection scope of this application. This application is intended to cover these modifications and variations of this application provided that they fall within the scope of the following claims and their equivalent technologies.

## Claims

1. A communication method, comprising:
obtaining, by a gateway, first information, wherein the first information comprises any one or any combination of information that indicates an integrity protection algorithm, information that indicates an encryption algorithm, an integrity protection key, or an encryption key, and the gateway belongs to a second communication system;
sending, by the gateway, an access protocol message to a first node, wherein the access protocol message comprises the first information, and the first node belongs to a first communication system; and
exchanging, by the gateway, communication information with the first node according to a general packet radio service tunneling protocol GTP user plane protocol based on the first information.

2. The method according to claim 1, wherein the access protocol message comprises an extensible authentication protocol EAP-5G message or a SparkLink access protocol SLAP message.

3. The method according to claim 1 or 2, wherein the obtaining, by a gateway, first information comprises:
receiving, by the gateway, the first information from a core network device, wherein the core network device belongs to the second communication system; or
receiving, by the gateway, second information from a core network device, and generating the first information based on the second information, wherein
the first information or the second information or both correspond to capability information of the first node, and the capability information comprises information indicating that the first node supports the integrity protection algorithm and/or the encryption algorithm.

4. The method according to any one of claims 1 to 3, wherein the communication information comprises control plane signaling and/or user plane data; and
the method further comprises:
sending, by the gateway, priority information to the first node, wherein
the priority information indicates a priority of the control plane signaling and/or a priority of the user plane data.

5. The method according to any one of claims 1 to 4, wherein the method further comprises:
sending, by the gateway, first quality of service QoS information to the first node, wherein
the first QoS information is used for communication between nodes in the first communication system, and/or communication between the first node and the core network device.

6. The method according to claim 5, wherein the first QoS information is from the core network device; or
the method further comprises:
receiving, by the gateway, second QoS information from the core network device, and generating the first QoS information based on link status information and the second QoS information; or
generating, by the gateway, the first QoS information based on link status information.

7. The method according to any one of claims 1 to 6, wherein the method further comprises:
sending, by the gateway, first tunnel information to the first node, wherein
the first tunnel information is used to establish a tunnel for exchanging the information between the first node and the gateway.

8. The method according to any one of claims 4 to 7, wherein at least one of the priority information, the first QoS information, or the first tunnel information is carried in the access protocol message.

9. The method according to claim 8, wherein the access protocol message further comprises indication information; and
the indication information indicates at least one of the first information, the priority information, the first QoS information, or the first tunnel information.

10. A communication method, comprising:
receiving, by a first node, first information from a gateway, wherein the first information comprises any one or any combination of information that indicates an integrity protection algorithm, information that indicates an encryption algorithm, an integrity protection key, or an encryption key, the first node belongs to a first communication system, and the gateway belongs to a second communication system; and
exchanging, by the first node, communication information with the gateway according to a general packet radio service tunneling protocol GTP user plane protocol based on the first information.

11. The method according to claim 10, wherein an access protocol message comprises an extensible authentication protocol EAP-5G message or a SparkLink access protocol SLAP message.

12. The method according to claim 10 or 11, wherein the method further comprises:
sending, by the first node, capability information to a core network device, wherein the capability information comprises information indicating that the first node supports the integrity protection algorithm and/or the encryption algorithm, the capability information corresponds to the first information, and the core network device belongs to the second communication system.

13. The method according to any one of claims 10 to 12, wherein the information comprises control plane signaling and/or user plane data; and
the method further comprises:
receiving, by the first node, priority information from the gateway, wherein the priority information indicates a priority of the control plane signaling and/or a priority of the user plane data; and
performing, by the first node, packet loss processing on the exchanged information based on the priority information.

14. The method according to any one of claims 10 to 13, wherein the method further comprises:
receiving, by the first node, first quality of service QoS information from the gateway; and
communicating, by the first node, with a second node in the first communication system based on the first QoS information; and/or
communicating, by the first node, with the core network device in the second communication system based on the first QoS information.

15. The method according to any one of claims 10 to 14, wherein the method further comprises:
receiving, by the first node, first tunnel information from the gateway; and
establishing, by the first node with the gateway based on the first tunnel information, a tunnel for exchanging the information.

16. A communication apparatus, comprising a processing module and a transceiver module, wherein
the processing module is configured to obtain first information, wherein the first information comprises any one or any combination of information that indicates an integrity protection algorithm, information that indicates an encryption algorithm, an integrity protection key, or an encryption key, and the communication apparatus belongs to a second communication system;
the transceiver module is configured to send an access protocol message to a first node, wherein the access protocol message comprises the first information, and the first node belongs to a first communication system; and
the processing module is further configured to exchange communication information with the first node according to a general packet radio service tunneling protocol GTP user plane protocol based on the first information.

17. The apparatus according to claim 16, wherein the access protocol message comprises an extensible authentication protocol EAP-5G message or a SparkLink access protocol SLAP message.

18. The apparatus according to claim 16 or 17, wherein the transceiver module is configured to:
receive the first information from a core network device, wherein the core network device belongs to the second communication system; or
receive second information from the core network device, and generate the first information based on the second information, wherein
the first information or the second information or both correspond to capability information of the first node, and the capability information comprises information indicating that the first node supports the integrity protection algorithm and/or the encryption algorithm.

19. The apparatus according to any one of claims 16 to 18, wherein the communication information comprises control plane signaling and/or user plane data; and
the transceiver module is further configured to:
send priority information to the first node, wherein
the priority information indicates a priority of the control plane signaling and/or a priority of the user plane data.

20. The apparatus according to any one of claims 16 to 19, wherein the transceiver module is further configured to:
send first quality of service QoS information to the first node, wherein
the first QoS information is used for communication between nodes in the first communication system, and/or communication between the first node and the core network device.

21. The apparatus according to claim 20, wherein the first QoS information is from the core network device; or
the transceiver module is further configured to receive second QoS information from the core network device; and the processing module is further configured to generate the first QoS information based on link status information and the second QoS information; or
the processing module is further configured to generate the first QoS information based on link status information.

22. The apparatus according to any one of claims 16 to 21, wherein the transceiver module is further configured to:
send first tunnel information to the first node, wherein
the first tunnel information is used to establish a tunnel for exchanging the information between the first node and the communication apparatus.

23. The apparatus according to any one of claims 19 to 22, wherein at least one of the priority information, the first QoS information, or the first tunnel information is carried in the access protocol message.

24. The apparatus according to claim 23, wherein the access protocol message further comprises indication information; and
the indication information indicates at least one of the first information, the priority information, the first QoS information, or the first tunnel information.

25. A communication apparatus, comprising a transceiver module and a processing module, wherein
the transceiver module is configured to receive first information from a gateway, wherein the first information comprises any one or any combination of information that indicates an integrity protection algorithm, information that indicates an encryption algorithm, an integrity protection key, or an encryption key, the communication apparatus belongs to a first communication system, and the gateway belongs to a second communication system; and
the processing module is configured to exchange communication information with the gateway according to a general packet radio service tunneling protocol GTP user plane protocol based on the first information.

26. The apparatus according to claim 25, wherein an access protocol message comprises an extensible authentication protocol EAP-5G message or a SparkLink access protocol SLAP message.

27. The apparatus according to claim 25 or 26, wherein the transceiver module is further configured to:
send capability information to a core network device, wherein the capability information comprises information indicating that the communication apparatus supports the integrity protection algorithm and/or the encryption algorithm, the capability information corresponds to the first information, and the core network device belongs to the second communication system.

28. The apparatus according to any one of claims 25 to 27, wherein the information comprises control plane signaling and/or user plane data; and
the transceiver module is further configured to:
receive priority information from the gateway, wherein the priority information indicates a priority of the control plane signaling and/or a priority of the user plane data; and
the processing module is further configured to:
perform packet loss processing on the exchanged information based on the priority information.

29. The apparatus according to any one of claims 25 to 28, wherein the transceiver module is further configured to receive first quality of service QoS information from the gateway; and the processing module is further configured to communicate with a second node in the first communication system based on the first QoS information; and/or
the processing module is further configured to communicate with the core network device in the second communication system based on the first QoS information.

30. The apparatus according to any one of claims 25 to 29, wherein the transceiver module is further configured to:
receive first tunnel information from the gateway; and
the processing module is further configured to establish, with the gateway based on the first tunnel information, a tunnel for exchanging the information.

31. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 9 or any one of claims 10 to 15 by using a logic circuit or executing code instructions.

32. A communication system, comprising the communication apparatus according to any one of claims 16 to 24 and the communication apparatus according to any one of claims 25 to 30.

33. A chip, comprising at least one processor and an interface circuit, wherein the processor is configured to execute a computer program or instructions stored in a memory, so that the chip performs the method according to any one of claims 1 to 9 or any one of claims 10 to 15.

34. A computer-readable storage medium, wherein the storage medium stores a computer program or instructions, and when the computer program or the instructions are executed by a communication apparatus, the method according to any one of claims 1 to 9 or any one of claims 10 to 15 is implemented.

35. A computer program product, wherein the computer program product comprises a computer program or instructions, and when the computer program or the instructions are executed by a control apparatus, the communication apparatus is enabled to perform the method according to any one of claims 1 to 9 or any one of claims 10 to 15.
